# EUROPEAN PATENT SPECIFICATION

(11) **EP 3 434 886 B1**
(45) Date of publication and mention of the grant of the patent: **04.05.2022**
(21) Application number: 18186176.6
(22) Date of filing: 27.07.2018
(51) Int. Cl.: F02D 41/02, F02D 41/00, B60W 20/19

(54) **AFTER TREATMENT SYSTEM THERMAL MANAGEMENT METHOD**
REGELUNGSVERFAHREN FÜR EIN ABGASNACHBEHANDLUNGSSYSTEM
PROCÉDÉ DE GESTION THERMIQUE DE SYSTÈME POST TRAITEMENT

(30) Priority: 28.07.2017 IT 201700087327
(43) Date of publication of application: 30.01.2019
(73) Proprietor: FPT Motorenforschung AG, 9320 Arbon (CH)
(72) Inventor: BORG, Jonathan, 9008 ST. GALLEN (CH)
(74) Representative: Studio Torta S.p.A.

(56) References cited:
- EP-A1- 2 944 531
- US-A1- 2013 098 032
- US-A1- 2016 290 218
- US-A1- 2017 066 436

## Description

### Cross-Reference To Related Applications

This application claims priority from Italian Patent Application No. 102017000087327 filed on July 28, 2017.

### Field of the invention

The present invention relates to a thermal management method of an after treatment system, in particular in the field of industrial vehicles.

### Description of the prior art

Industrial vehicles, due to their large displacement engines, are provided of large and complex after treatment systems (ATS), which need to reach a so called light-off temperature to become fully operative.

Several strategies have been developed in order to achieve such a result, reference is made e.g. to US2013/098032A1 or US2016/290218A1.

Thermal management can imply a fuel consumption penalty ranging between 2% and 14%, thus this is a real relevant problem.

Such strategies typically result in increased fuel injection by the application of engine inlet and/or outlet throttling.

### Summary of the invention

The main object of the present invention to provide a new alternative strategy to help the ATS to reach and maintain its light-off temperature.

The reaching and maintaining of the light-off temperature are in the following called as thermal management. Once the ATS temperature is well beyond the light off temperature, the ATS thermal management is suspended.

The main principle of the invention is to implement a variable geometry turbocharger and/or a controllable waste-gate, arranged to furnish reduced boost during ATS thermal management and to implement a drive assist system configured to predict a forthcoming load request and to restore the turbocharger boost response accordingly such that said boost reduction appears "transparent" to the driver.

It is well known that the boost reduction is beneficial for increasing ATS temperature due to a lower exhaust mass flow, thus resulting in higher exhaust temperatures reaching the ATS. However, this strategy is not implemented due to the consequent drivability worsening, particularly longer time in case of a sudden load request.

The drive assist systems also called "Advanced driver-assistance systems", or ADAS, are systems to help the driver in the driving process. They are mainly designed to increase car safety and more generally road safety.

A drive assist system consists of hardware comprising radar and/or optical sensors and interfaces to several vehicle inputs, such as signals from driver's pedals/levers and on-board cameras. In some cases, the drive assist system has also an interface towards the cartographic navigation system of the vehicle.

"Pedals" refer generically to the accelerator, brake, and clutch pedals. "Levers" refer generically to the gear lever, to the turn lights lever and so on.

The drive assist system hardware is programmed to collect and elaborate the signals received by said several sensors/interfaces in order to complement or supersede driver commands for increasing vehicle safety.

The drive assist system is capable to detect the service brake release. The service brake release as such has not a relevant significance, but a service brake release at a cross-roads is a clear sign of forthcoming vehicle acceleration and thus a forthcoming relevant torque request.

Therefore, according to the present invention, during ATS thermal management, the turbocharger boost pressure is reduced with respect to a rated one, however, when the drive assist system foresees a forthcoming relevant torque request by the driver, the turbocharger boost is restored to the rated value as long as such relevant torque is needed, then the boost is reduced again till a new relevant torque request or till the suspension of the ATS thermal management.

Equivalently the method comprises a cycling execution of a first step of reducing a turbocharger boost set-point when a temperature of the ATS is below a predetermined threshold and a second step of restoring said boost set-point to a rated value when said drive assist system foresees a forthcoming relevant torque request on the basis of a radar sensor (RS) and/or a camera sensor (CM).

When the drive assist system no longer foresees a forthcoming relevant torque request the method comes back to the first step.

If, of course the ATS temperature is higher than a predetermined value, the present method is suspended till a future thermal management need arises.

According to another preferred embodiment of the invention, the drive assist system can recognize the traffic lights so as to restore the rated boost value when green light appears or already when the light is changing from red to green.

According to a further embodiment of the invention, the drive assist system is capable to detect the change of a speed limit along a road so as to switch the boost into said reduced boost operation mode when the speed limit is reduced and into said rated boost operation mode when the speed limit increases.

Thanks to the coupling of the turbocharger and drive assist system the problems connected with a slow dynamic advantageously, the driver's feeling is completely unchanged, but at the same time the ATS temperature is increased.

These and further objects are achieved by means of the attached claims.

### Brief description of the drawings

The invention will become fully clear from the following detailed description, given by way of a mere exemplifying and non limiting example, to be read with reference to the attached drawing figures, wherein:
- Fig. 1 shows schematically a vehicle provided with a system programmed according to the present invention;
- Fig. 2 shows in detail a detail of figure 1.

Dashed lines indicates electrical lines for interoperation of electric/electronic devices.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

Advanced driver-assistance systems (ADAS) are systems developed to automate/adapt/enhance vehicle systems for safety and better driving. Safety features are designed to avoid collisions and accidents by offering technologies that alert the driver to potential problems, or to avoid collisions by implementing safeguards and taking over control of the vehicle VH. Adaptive features may automate lighting, provide adaptive cruise control, automate braking, incorporate GPS, traffic warnings, connect to smartphones, alert driver to other cars or dangers, keep the driver in the correct lane, or show what is in blind spots.

ADAS relies on inputs from multiple data sources, including automotive imaging, LiDAR, radar, image processing, computer vision, and in-car networking. Additional inputs are possible from other sources separate from the primary vehicle platform, such as other vehicles, referred to as Vehicle-to-vehicle (V2V), or Vehicle-to-Infrastructure (such as mobile telephony or wifi data network) systems.

A good definition of ADAS is given in http://www.autoconnectedcar.com/adas-advanced-driver-assistance-sytems-definition-auto-connected-car/. According to the present invention, the ADAS capability is not implemented to improve vehicle safety or better driving, but to carry out thermal ATS management as long as relevant torque and boost are not required.

A torque is considered as relevant when it exceeds the 30 - 50% of the rated (100%) one.

At low load demand, the turbocharger TC boost can be reduced such that it approaches atmospheric pressure (zero relative boost) at very low load (e.g., <10% of rated).

In other words, when the ATS temperature is under a predetermined value, the turbocharger is set with a reduced boost capability in order to favor ATS temperature increasing, but when the ADAS foresees relevant torque requested by the driver, the turbocharger boost is restored in order to maintain an acceptable vehicle drivability.

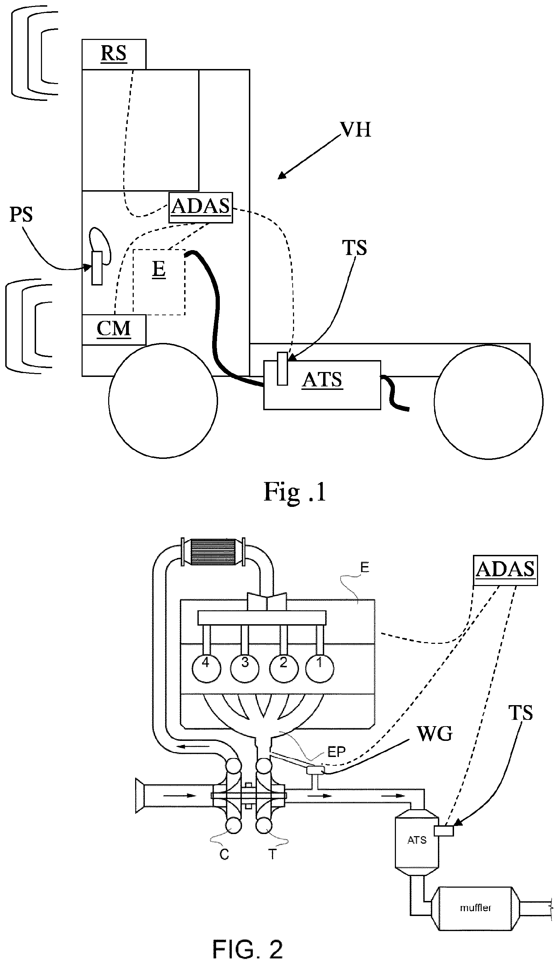

Figure 1 shows a vehicle with an internal combustion engine E provided with a turbocharger TC, wherein T indicates a turbine arranged on the exhaust pipe of the engine, to be driven by the exhaust gasses thereof and C indicate a compressor driven by the turbine to compress fresh air in the combustion engine intake. The turbocharger is indicated with the sign TC.

Being per se known some algorithms implemented in the ADAS to judge a forthcoming vehicle acceleration or in general a requested torque increase, the present invention appears to be easy to be implemented.

According to a preferred embodiment of the invention, the drive assist system (ADAS) is capable to detect the service brake release at a cross-roads and to foresee a forthcoming vehicle acceleration and thus a forthcoming relevant torque request. As a consequence, the ADAS restores the turbocharger set-point to offer the rated boost to the internal combustion engine.

According to another preferred embodiment of the invention, the ADAS is capable to recognize traffic lights, thanks to a camera CM oriented according to the vehicle normal travelling direction, so as to restore the rated boost value when green light is switched on.

According to a further embodiment of the invention, the ADAS is capable to detect the change of a speed limit along a road, so as to switch the boost into said reduced boost operation mode when the speed limit is reduced and into said rated boost operation mode when the speed limit increases.

According to an embodiment of the invention, the boost is controlled by adjusting the geometry of the turbine, while according to another embodiment of the invention, the boost is controlled by adjusting the intervention threshold of the wastegate valve WG, which, as known, permits the exhaust gasses to bypass the turbine.

The ADAS comprises a dedicated control unit interoperating or coinciding with the VMU (Vehicle control unit).

As known, the Vehicle control unit receives all the input coming from the driving pedal sensors PS and from the sensors arranged along with the ATS, including the temperature sensor TS, lambda sensors, NOx sensors and so on.

The ADAS operates on the basis of radar sensors RS and/or cameras (CM).

For example, the present method can be implemented directly in the ADAS system or in the VMU when they are separated control units.

According to other practical implementations, the signals coming from the ATS are directly collected by the Engine control unit (ECU), and corresponding messages are published on the CAN data network. These represent simple implementation variations that do not alter the basic idea of the invention.

Many changes, modifications, variations and other uses and applications will become apparent to those skilled in the art after considering the specification and the accompanying drawings which disclose preferred embodiments.

The features disclosed in the prior art background are introduced only in order to better understand the invention.

In addition, said features define the context of the present invention, thus such features shall be considered in common with the detailed description.

Further implementation details will not be described, as the man skilled in the art is able to carry out the invention starting from the teaching of the above description. The invention is defined by the appended claims.

## Claims

1. Method for thermal management of an After treatment system (ATS) of a vehicle (VH) provided with a turbocharged internal combustion engine (E), and with an ATS to treat exhaust gas produced by said internal combustion engine, the turbocharger comprising a variable turbine and/or a controllable waste-gate, the method comprising a cyclic execution of a first step of reducing a turbocharger (TC) boost set-point when a temperature of said ATS is below a predetermined threshold and a second step of restoring said boost set-point to a rated value when a forthcoming relevant torque request is foreseen; **characterized in that** the vehicle comprises an advanced drive assistance system (ADAS), which interacts with at least said internal combustion engine and comprises an interface to a temperature sensor (TS) arranged along said ATS, and a radar sensor (RS) and/or a camera sensor (CM) facing forward of said vehicle, and wherein the second step is carried out when said advanced drive assistance system (ADAS) foresees the forthcoming relevant torque request on the basis of said radar sensor (RS) and/or said camera sensor (CM).

2. Method according to claim 1, wherein said forthcoming relevant torque request is foreseen when a service brake is released at a cross-roads.

3. Method according to claim 1 or 2, wherein said forthcoming relevant torque request is foreseen when said advanced drive assistance system (ADAS) recognizes that a traffic light switches to a green light.

4. Method according to any one of claims 1 - 3, wherein said forthcoming relevant torque request is foreseen when said advanced drive assistance system (ADAS) detects that a change of a speed limit along a road so as to restore said rated boost operation mode when said speed limit increases.

5. Vehicle comprising:
- a turbocharged internal combustion engine,
- an after treatment system (ATS) to treat exhaust gas produced by said internal combustion engine,
- a turbocharger (TC) comprising a variable turbine (T) and/or a controllable waste-gate (WG),
- a system for thermal management of the ATS, the system comprising a temperature sensor associated with said ATS and a control unit configured to carry out cyclic executing of a first step of reducing a turbocharger boost set-point when a measured temperature of said ATS is below a predetermined threshold and a second step of restoring said boost set-point to a rated value when a forthcoming relevant torque request is foreseen; **characterized by** further comprising an advanced drive assistance system (ADAS), which interacts with at least said internal combustion engine (E) and comprises an interface to a temperature sensor (TS) arranged along said ATS, and a radar sensor (RS) and/or a camera sensor (CM) facing forward of said vehicle, and wherein said advanced drive assistance system (ADAS) is configured to foresee said forthcoming relevant torque request on the basis of said radar sensor (RS) and/or said camera sensor (CM).

6. Vehicle according to claim 5, wherein said advanced drive assistance system (ADAS) comprises an interface to a vehicular pedal/lever sensor (PS).

7. Vehicle according to claim 5 or 6, wherein said control unit is programmed to execute all the steps of any one of the claims 2 - 4.

## Patentansprüche

1. Verfahren für das Thermomanagement eines Nachbehandlungssystems (ATS) eines Fahrzeugs (VH), das mit einer turbogeladenen Brennkraftmaschine (E) und mit einem ATS zum Behandeln des Abgases, das durch die Brennkraftmaschine erzeugt wird, versehen ist, wobei der Turbolader eine veränderliche Turbine und/oder ein steuerbares Ladedruckregulierungsventil umfasst und das Verfahren eine zyklische Ausführung eines ersten Schritts des Verringerns eines Turbolader-Verstärkungssollwerts (TC-Verstärkungssollwert), wenn eine Temperatur des ATS unter einem vorgegebenen Schwellenwert liegt, und eines zweiten Schritts des Zurückversetzens des Verstärkungssollwerts zu einem Nennwert, wenn eine bevorstehende relevante Drehmomentanforderung vorhergesehen wird, umfasst; **dadurch gekennzeichnet, dass** das Fahrzeug ein fortschrittliches Fahrunterstützungssystem (ADAS) umfasst, das mindestens mit der Brennkraftmaschine interagiert und eine Schnittstelle zu einem Temperatursensor (TS), der entlang des ATS angeordnet ist, und einem Radarsensor (RS) und/oder einem Kamerasensor (CM), die vom Fahrzeug nach vorn orientiert sind, umfasst, wobei der zweite Schritt ausgeführt wird, wenn das fortschrittliche Fahrunterstützungssystem (ADAS) die bevorstehende relevante Drehmomentanforderung auf der Grundlage des Radarsensors (RS) und/oder des Kamerasensors (CM) vorhersieht.

2. Verfahren nach Anspruch 1, wobei die bevorstehende relevante Drehmomentanforderung vorhergesehen wird, wenn eine Betriebsbremse bei einer Kreuzung freigegeben wird.

3. Verfahren nach Anspruch 1 oder 2, wobei die bevorstehende relevante Drehmomentanforderung vorhergesehen wird, wenn das fortschrittliche Fahrunterstützungssystem (ADAS) erkennt, dass eine Ampel auf Grün schaltet.

4. Verfahren nach einem der Ansprüche 1-3, wobei die bevorstehende relevante Drehmomentanforderung vorhergesehen wird, wenn das fortschrittliche Fahrunterstützungssystem (ADAS) detektiert, dass eine Änderung einer Geschwindigkeitsbeschränkung entlang einer Fahrbahn erfolgt, um den Nennverstärkungsbetriebsmodus wiederherzustellen, wenn sich die Geschwindigkeitsbeschränkung erhöht.

5. Fahrzeug, das Folgendes umfasst:
- eine turbogeladene Brennkraftmaschine,
- ein Nachbehandlungssystem (ATS), um Abgas, das durch die Brennkraftmaschine erzeugt wird, zu behandeln,
- einen Turbolader (TC), der eine veränderliche Turbine (T) und/oder ein steuerbares Ladedruckregulierungsventil (WG) umfasst, und
- ein System für das Thermomanagement des ATS, wobei das System einen Temperatursensor, der dem ATS zugeordnet ist, und eine Steuereinheit, die konfiguriert ist, ein zyklisches Ausführen eines ersten Schritts des Verringerns eines Turbolader-Verstärkungssollwerts, wenn eine gemessene Temperatur des ATS unter einem vorgegebenen Schwellenwert liegt, und eines zweiten Schritts des Zurückversetzens des Verstärkungssollwerts zu einem Nennwert, wenn eine bevorstehende relevante Drehmomentanforderung vorhergesehen wird, auszuführen, umfasst;
ferner **gekennzeichnet durch** ein fortschrittliches Fahrunterstützungssystem (ADAS), das mindestens mit der Brennkraftmaschine (E) interagiert, und eine Schnittstelle zu einem Temperatursensor (TS), der entlang des ATS angeordnet ist, und einem Radarsensor (RS) und/oder einem Kamerasensor (CM), die vom Fahrzeug vorwärts gewandt sind, umfasst, wobei das fortschrittliche Fahrunterstützungssystem (ADAS) konfiguriert ist, die bevorstehende relevante Drehmomentanforderung auf der Grundlage des Radarsensors (RS) und/oder des Kamerasensors (CM) vorherzusehen.

6. Fahrzeug nach Anspruch 5, wobei das fortschrittliche Fahrunterstützungssystem (ADAS) eine Schnittstelle zu einem Fahrzeug-Pedal/Hebel-Sensor (Fahrzeug-PS) umfasst.

7. Fahrzeug nach Anspruch 5 oder 6, wobei die Steuereinheit programmiert ist, alle Schritte nach einem der Ansprüche 2-4 auszuführen.

## Revendications

1. Méthode de gestion thermique d'un système de post-traitement (ATS) d'un véhicule (VH) pourvu d'un moteur à combustion interne (E), et d'un ATS pour traiter un gaz d'échappement produit par ledit moteur à combustion interne, le turbocompresseur comprenant une turbine variable et/ou une soupape de décharge pouvant être commandée, la méthode comprenant une exécution cyclique d'une première étape de réduction d'un point de consigne de suralimentation de turbocompresseur (TC) lorsqu'une température dudit ATS est inférieure à un seuil prédéterminé et d'une deuxième étape de rétablissement dudit point de consigne de suralimentation à une valeur nominale lorsqu'une prochaine demande de couple pertinente est prévue ; **caractérisée en ce que** le véhicule comprend un système évolué d'aide à la conduite (ADAS) qui interagit avec au moins ledit moteur à combustion interne et comprend une interface avec un capteur de température (TS) agencé le long dudit ATS, et un capteur radar (RS) et/ou un capteur de caméra (CM) faisant face vers l'avant dudit véhicule, et dans laquelle la deuxième étape est effectuée lorsque ledit système évolué d'aide à la conduite (ADAS) prévoit la prochaine demande de couple pertinente sur la base dudit capteur radar (RS) et/ou dudit capteur de caméra (CM).

2. Méthode selon la revendication 1, dans laquelle ladite prochaine demande de couple pertinente est prévue lorsqu'un frein de service est relâché à un carrefour.

3. Méthode selon la revendication 1 ou 2, dans laquelle ladite prochaine demande de couple pertinente est prévue lorsque ledit système évolué d'aide à la conduite (ADAS) reconnaît qu'un feu de circulation passe au vert.

4. Méthode selon l'une quelconque des revendications 1 à 3, dans laquelle ladite prochaine demande de couple pertinente est prévue lorsque ledit système évolué d'aide à la conduite (ADAS) détecte un changement de limitation de vitesse le long d'une route de manière à rétablir ledit mode de fonctionnement à suralimentation nominal lorsque ladite limitation de vitesse augmente.

5. Véhicule comprenant :
- un moteur à combustion interne turbocompressé,
- un système de post-traitement (ATS) pour traiter un gaz d'échappement produit par ledit moteur à combustion interne,
- un turbocompresseur (TC) comprenant une turbine variable (T) et/ou une soupape de décharge pouvant être commandée (WG),
- un système de gestion thermique de l'ATS, le système comprenant un capteur de température associé audit ATS et une unité de commande configurée pour effectuer une exécution cyclique d'une première étape de réduction d'un point de consigne de suralimentation de turbocompresseur lorsqu'une température mesurée dudit ATS est inférieure à un seuil prédéterminé et d'une deuxième étape de rétablissement dudit point de consigne de suralimentation à une valeur nominale lorsqu'une prochaine demande de couple pertinente est prévue ;
**caractérisé en ce qu'**il comprend en outre un système évolué d'aide à la conduite (ADAS) qui interagit avec au moins ledit moteur à combustion interne (E) et comprend une interface avec un capteur de température (TS) agencé le long dudit ATS, et un capteur radar (RS) et/ou un capteur de caméra (CM) faisant face vers l'avant dudit véhicule, et dans lequel ledit système évolué d'aide à la conduite (ADAS) est configuré pour prévoir la prochaine demande de couple pertinente sur la base dudit capteur radar (RS) et/ou dudit capteur de caméra (CM).

6. Véhicule selon la revendication 5, dans lequel ledit système évolué d'aide à la conduite (ADAS) comprend une interface avec un capteur de pédale/levier véhiculaire (PS).

7. Véhicule selon la revendication 5 ou 6, dans lequel ladite unité de commande est programmée pour exécuter toutes les étapes selon l'une quelconque des revendications 2 à 4.
